# EUROPEAN PATENT APPLICATION

(11) **EP 1 926 249 A1**
(43) Date of publication of application: **28.05.2008**
(21) Application number: 06817810.2
(22) Date of filing: 13.11.2006
(51) Int. Cl.: H04L 12/14

(54) **A METHOD FOR IMPLEMENTING PPV MULTICAST SERVICE**

(30) Priority: 28.02.2006 CN 200610034082
(71) Applicant: Huawei Technologies Co., Ltd., Longgang District, Shenzhen Guangdong 518129 (CN)
(72) Inventor: WANG, Deyi, Shenzhen, Guangdong 518129 (CN)
(74) Representative: Manitz, Finsterwald & Partner GbR
(86) International application number: PCT/CN2006/003040
(87) International publication number: WO 2007/098655

(57) **Abstract**

Embodiments of the present invention provide a method for implementing a Pay Per View (PPV) multicast service, including: sending, by a user terminal, a PPV program playing request to an access device; determining, by the access device, whether the user terminal has the right to receive the PPV program based on the current time and the acquired right information of the user terminal; if the user terminal has the right, forwarding the PPV program data stream from a multicast source to the user terminal. In accordance with the present invention, an access device may control the time of forwarding a program data stream to a user terminal according to the right of the user terminal of receiving the program, thus a PPV multicast service is implemented.

## Description

### Field of the Invention

The present invention relates to multicast technologies, and particularly, to a method for implementing a Pay Per View (PPV) multicast service.

### Background of the Invention

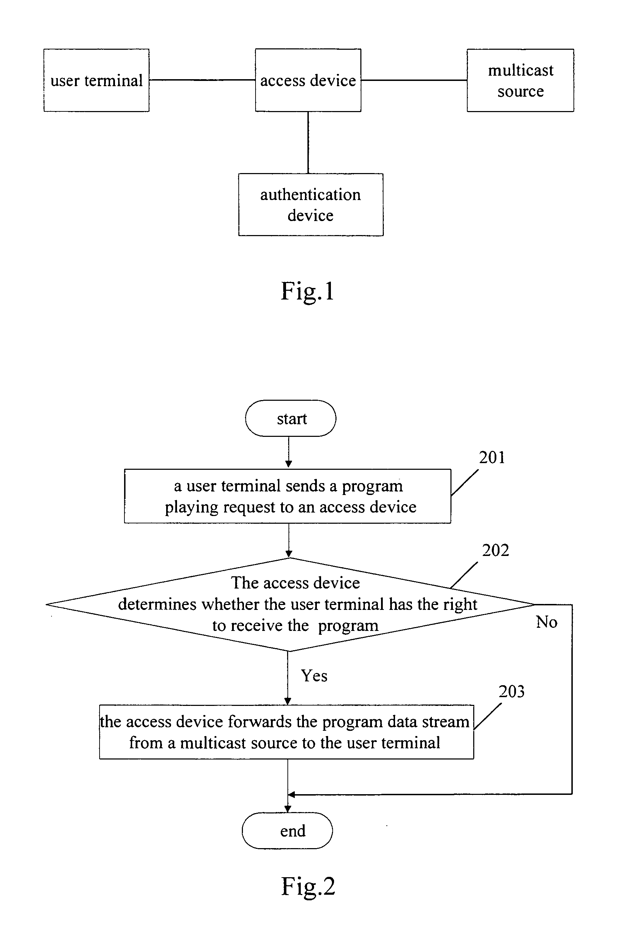

At present, network TV services are usually provided by multicasting technology. Figure 1 is a schematic diagram illustrating an elementary architecture of a multicast network. Referring to Figure 1, the multicast network includes a user terminal, an access device, an authentication device and a multicast source. When a user terminal intends to join a multicast group, the user terminal first sends a multicast group joining request to an access device. On receipt of the request, the access device determines whether to forward a multicast data stream to the user terminal based on the right information of the user terminal saved in the access device or acquired from an authentication device. If the user terminal does not have the right, the access device rejects the request of the user terminal. If the user terminal has the right, the access device sends a request success response message to the user terminal, adds the address information of the user terminal to the multicast forwarding table corresponding to the multicast group, and forwards the multicast data stream from the multicast source to the user terminal. Thereafter, the access device checks at intervals whether the user terminal is still receiving the multicast data stream; if the user terminal needs to be kept staying in the multicast group, it must return a response to the access device. On receipt of the response, the access device keeps on forwarding the multicast data stream to the user terminal; otherwise, the access device stops forwarding the multicast data stream. Such a process may also exist between a multicast source and an access device to maintain the forwarding of the multicast data stream. A user terminal may interact with an access device by using Internet Group Management Protocol (IGMP) packets, and an access device may interact with a multicast source by using IGMP packets, either.

At present, the multicast network only provides users with conventional multicast programs, in which a user terminal, after being authorized, may join a multicast group and receive the multicast program or leave the multicast group and stop receiving the multicast program at any time. In practice, an operator may need to provide user terminals with Pay Per View (PPV) programs. The PPV programs are programs to which a time period is set and which can only be received by user terminals within the specified time period. Within the scope of the prior art, no solution is proposed to grant a user terminal the right to receive a PPV program precisely at the beginning of the program and to cancel the right to receive the PPV program for the user terminal precisely at the ending of the program, thus a multicast service for a PPV program can hardly be implemented.

### Summary of the Invention

The main objective of the present invention is to provide a method for implementing a Pay Per View (PPV) multicast service. The method may authorize a user terminal at the beginning of a program, and cancel the right of the user terminal at the ending of the program.

To achieve the above objective, the technical solution in accordance with the present invention is as follows:

A method for implementing a Pay Per View (PPV) multicast service, including:
S1. sending, by a user terminal, a PPV program playing request to an access device;
S2. determining, by the access device, whether the user terminal has the right to receive a PPV program based on the current time and the acquired right information of user terminal; if the user terminal has the right, forwarding the PPV program data stream from a multicast source to the user terminal.

In the above scheme, the right information in Step S2 includes: an effective time indicating the time when the right of the user terminal to receive the PPV program comes into effect, and an expiration time indicating the time when the right of the user terminal to receive the PPV program expires;
in Step S2, determining whether the user terminal has the right to receive the PPV program includes:
   comparing, by the access device, the current time with the effective time and the expiration time; if the current time exceeds the effective time and has not reached the expiration time, determining that the user terminal has the right to receive the program; otherwise, the user terminal does not have the right to receive the program.

In the above scheme, before the step S1, the method further includes:
after receiving a program booking request, determining, by the authentication device, the effective time and the expiration time according to the program booking request, and sending the generated right information including the effective time and the expiration time to the access device; saving, by the access device, the right information including the effective time and the expiration time.

In the above scheme, the program booking request contains a program identity;
determining the effective time and the expiration time by the authentication device includes:
   acquiring, by the authentication device, a start time and an end time of a program corresponding to the program identity from the program information saved in the authentication device according to the received program identity; designating the start time as the effective time and the end time as the expiration time.

In the above scheme, the program booking request contains a start time and an end time;
determining the effective time and the expiration time by the authentication device includes:
   designating the start time contained in the program booking request as the effective time and the end time contained in the program booking request as the expiration time.

In the above scheme, the method for saving the effective time and the expiration time includes:
saving, by the access device, the effective time and the expiration time as the parameters of the program attributes; or, saving the effective time and the expiration time as the parameters of the template attributes.

In the above scheme, after the step S2, the method further includes:
determining, by the access device, in real time whether the current time exceeds or reaches the expiration time; if the current time exceeds or reaches the expiration time, stopping forwarding the PPV program data stream to the user terminal; or,
determining, by the authentication device, in real time whether the current time exceeds or reaches the expiration time; if the current time exceeds or reaches the expiration time, notifying the access device that the right of the user terminal has terminated; stopping forwarding, by the access device, the PPV program data stream to the user terminal.

In the above scheme, after the authentication device sends the right information to the access device, the method further includes:
determining, by the authentication device, in real time whether the current time exceeds or reaches the expiration time; if the current time exceeds or reaches the expiration time, notifying the access device that the right of the user terminal has terminated.

After the Step S2, the method further includes: after receiving the notification about the terminating of the right of the user terminal from the authentication device, stopping forwarding, by the access device, the PPV program data stream to the user terminal.

As described above, because the right information of the user terminal generated by the authentication device includes the effective time and the expiration time, the access device may forward a program data stream to the user terminal when the current time attains the effective time, and stop forwarding the program data stream to the user terminal when the current time attains the expiration time, thus a PPV multicast service is implemented.

### Brief description of the drawings

Figure 1 is a schematic diagram illustrating the elementary architecture of a multicast network.

Figure 2 is a flowchart in accordance with the present invention.

Figure 3 is a flowchart illustrating an embodiment in accordance with the present invention.

### Detailed description of the invention

A detailed description of the present invention is provided hereinafter with reference to the attached drawings and specific embodiments.

Figure 2 is a flowchart in accordance with an embodiment of the present invention. As shown in Figure 2, a method provided by an embodiment of the present invention for implementing a Pay Per View (PPV) multicast service includes the following steps.

Step 201: a user terminal sends a PPV program playing request to an access device.

Steps 202~203: the access device determines whether the user terminal has the right to receive a PPV program according to the current time and the acquired right information of the user terminal, and forwards a PPV program data stream from a multicast source to the user terminal if the user terminal has the right.

According to an embodiment of the present invention, the right information of a user terminal includes an effective time indicating the time when the right of a user terminal to receive a PPV program goes into effect and an expiration time indicating the time when the right of a user terminal to receive a PPV program expires.

When determining whether a user terminal has the right to receive a PPV program, the access device may compare the current time with the effective time and the expiration time. If the current time exceeds or reaches the effective time and has not reached the expiration time, the access device determines that the user terminal has the right to receive the program. Otherwise, the access device determines that the user terminal does not have the right to receive the program. In this way, the access device can control the forwarding of the PPV program data stream to the user terminal.

Before a user terminal receives a PPV program multicast service, the access device needs to obtain the right information of the user terminal. The method includes the following steps: a terminal device sends a program booking request to an authentication device; the authentication device determines an effective time and an expiration time for the right information of the user, and sends the generated right information including the effective time and the expiration time to an access device; and the access device obtains and stores the right information including the effective time and the expiration time. It can be understood that the terminal device may be a user terminal described in the present invention or one of other terminal devices, for example an ordinary PC, as long as it has the ability to browse the web site of the authentication device, to book a program at the authentication device and to request the authentication device to authorize the user terminal the right to receive the booked program.

According to an embodiment of the present invention, the method for generating the right information of a user terminal by the authentication device is similar to that in the prior art, and the difference lies in that, the authentication device needs to further determine the effective time and the expiration time for the right information.

There are pluralities of methods for the authentication device to determine the effective time and the expiration time. For example, program information may be saved in the authentication device in advance, and the program information includes the identity as well as the start time and the end time of the program. A terminal device sends a program booking request carrying the identity of the program to the authentication device, then the authentication device may take the start time of the program corresponding to the program identity as the effective time and take the end time of the program as the expiration time.

For yet another example, the terminal device directly specifies the start time and the end time in the program booking request, and the authentication device may take the start time and the end time designated by the user as the effective time and the expiration time respectively. The start time and the end time in the present method, which may be determined by the user, are different from the start time and the end time of the program in the foregoing method. It can be understood that the authentication device may also determine the effective time and the expiration time using other methods, which will not be listed one by one any more herein.

To make the solution of the present invention more apparent, an embodiment of the method for implementing a PPV multicast service is described hereinafter.

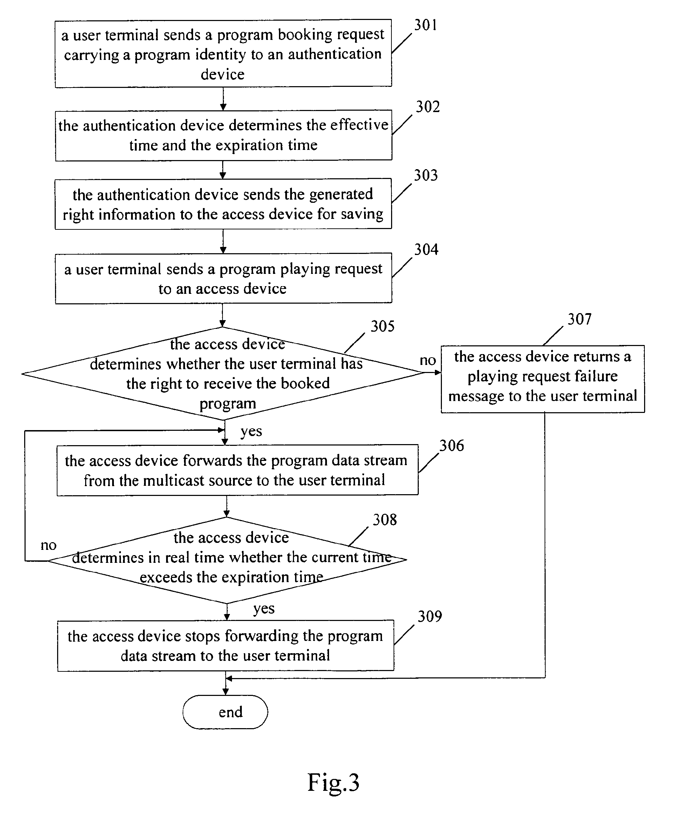

Figure 3 is a flowchart of the embodiment in accordance with the present invention. As shown in Figure 3, the method provided by the embodiment for implementing multicast service includes the following steps.

Step 301: a user terminal sends a program booking request containing a program identity to an authentication device.

The user terminal typically needs to send the program booking request to the authentication device via an IP network.

Step 302: the authentication device acquires a start time and an end time of the program corresponding to the program identity from the stored program information according to the program identity, determines the start time as an effective time and the end time as an expiration time.

Step 303: the authentication device sends the generated right information including the effective time and the expiration time to the access device; the access device saves the effective time and the expiration time as parameters of corresponding program attributes.

The access device may bind the user terminal with the program and the right information of the program to implement forwarding of the data stream of the program to the user terminal. In this case, a program attribute table, which is used for describing and controlling the forwarding of the programs, may be set in the access device. And the effective time and the expiration time may be saved in the program attribute table as parameters of the program attributes.

The access device may also bind the user terminal with a template corresponding to multiple programs and with the right information of the template, and thus implement the forwarding of the data stream of the program to the user terminal. In this case, a template attribute table may be stored in the access device, which is used for describing and controlling the forwarding of the program and in which the effective time and the expiration time may be saved as parameters of the template attributes.

It should be understood that the effective time and the expiration time may also be saved directly as individual variables instead of being saved as parameters of the program attributes or of the template attributes.

After generating the right information, the authentication device may send the right information to the access device immediately or when the time reaches the effective time.

The values of the right information may specify the right of watching, previewing or no right. The method for generating the right information and the above mentioned types of the right information are in accordance with the prior art, which will not be further described herein.

Step 304: a user terminal sends a PPV program playing request to an access device.

Steps 305~307: the access device compares the current time with the effective time and the expiration time, and determines whether the user terminal has the right to receive the booked PPV program according to the compare result; if the user terminal has the right, the access device forwards the PPV program data stream from the multicast source to the user terminal, and proceeds to Step 308; if the user terminal does not have the right, the access device returns a playing request failure message to the user terminal, and quits this procedure.

In this embodiment, upon determining that the user terminal does not have the right of receiving the program, the access device returns a playing request failure message to the user terminal. In practice, the access device may also not return a playing request failure message, i.e. perform nothing.

Steps 308~309: the access device determines in real time whether the current time exceeds or reaches the expiration time. If the current time exceeds or reaches the expiration time, the access device stops forwarding the PPV program data stream to the user terminal; otherwise, the access device keeps on forwarding the PPV program data stream from the multicast source to the user terminal.

In this embodiment, the access device initiates an expiration detection by itself at the beginning of forwarding the program data stream to the user terminal, i.e. checks in real time whether the current time exceeds or reaches the expiration time.

In practice, the authentication device may also be used for determining in real time whether the current time exceeds or reaches the expiration time, which includes: after sending the right information of the user terminal to the access device, the authentication device initiates an expiration detection, and determines in real time whether the current time exceeds or reaches the expiration time; if the current time exceeds or reaches the expiration time, the authentication device notifies the access device that the right of the user terminal has terminated, and the access device stops forwarding the PPV program data stream to the user terminal; or,

upon starting forwarding the data stream of the program to the user terminal, the access device notifies the authentication device that the user terminal starts receiving the data stream of the program; the authentication device initiates an expiration detection, and determines in real time whether the current time exceeds or reaches the expiration time; if the current time exceeds or reaches the expiration time, the authentication device notifies the access device that the right of the user terminal has terminated; then the access device stops forwarding the PPV program data stream to the user terminal.

The multicast source may provide one or more channels to the user terminal, and the channels are conventional multicast programs and each of such channels includes several programs. If only one channel is provided, the interactive messages among the user terminal, the access device and the authentication device need not include a channel identity for identifying different channels; if more than one channels are provided, the interactive messages among the user terminal, the access device and the authentication device will need to include the channel identity.

In addition, the effective time and the expiration time may be an absolute time such as 12:30:31, December 31, 2005 or a relative time such as the number of 50-milliseconds from 12:30:31, December 31, 2005.

With the solution of the present invention, an access device may forward the PPV program data stream booked by a user terminal to the user terminal when the current time reaches the effective time, and stops forwarding the PPV program data stream to the user terminal when the current time reaches the expiration time, and thus a PPV multicast service can be implemented effectively.

## Claims

1. A method for implementing a Pay Per View, PPV, multicast service, comprising:
S1. sending, by a user terminal, a PPV program playing request to an access device;
S2. determining, by the access device, whether the user terminal has the right of receiving the PPV program based on the current time and the acquired right information of the user terminal; if the user terminal has the right, forwarding the PPV program data stream from a multicast source to the user terminal.

2. The method according to Claim 1, wherein the right information in Step S2 comprises: a effective time indicating the time when the right of the user terminal to receive the PPV program comes into effect, and an expiration time indicating the time when the right of the user terminal to receive the PPV program expires;
in Step S2, determining by the access device whether the user terminal has the right of receiving the PPV program comprises:
comparing, by the access device, the current time with the effective time and the expiration time; if the current time exceeds the effective time and has not exceeded the expiration time, the user terminal has the right to receive the program; otherwise, the user terminal does not have the right to receive the program.

3. The method according to Claim 1 or 2, before the step S1, further comprising:
determining, by an authentication device after receiving a program booking request, the effective time and the expiration time according to the program booking request, and sending the generated right information including the effective time and the expiration time to the access device; saving, by the access device, the right information including the effective time and the expiration time.

4. The method according to Claim 3, wherein the program booking request comprises a program identity;
determining the effective time and the expiration time by the authentication device comprises:
acquiring, by the authentication device, a start time and an end time of a program corresponding to the program identity from the program information saved in the authentication device according to the received program identity; designating the start time as the effective time and the end time as the expiration time.

5. The method according to Claim 3, wherein the program booking request comprises a start time and an end time;
determining the effective time and the expiration time by the authentication device comprises:
designating, by the authentication device, the start time contained in the program booking request as the effective time; designating, by the authentication device, the end time contained in the program booking request as the expiration time.

6. The method according to Claim 3, wherein saving the effective time and the expiration time comprises:
saving, by the access device, the effective time and the expiration time as the parameters of the program attributes; or
saving, by the access device, the effective time and the expiration time as the parameters of the template attributes.

7. The method according to Claim 3, after the step S2, further comprising:
determining, by the access device, in real time whether the current time exceeds or attains the expiration time; if the current time attains or exceeds the expiration time, stopping forwarding, by the access device, the PPV program data stream to the user terminal; or,
determining, by the authentication device, in real time whether the current time exceeds or attains the expiration time; if the current time exceeds or attains the expiration time, notifying the access device that the right of the user terminal has terminated; stopping forwarding, by the access device, the PPV program data stream to the user terminal.

8. The method as described in Claim 3, after the authentication device sends the right information to the access device, further comprising:
determining, by the authentication device, in real time whether the current time attains or exceeds the expiration time; if the current time attains or exceeds the expiration time, notifying the access device that the right of the user terminal has terminated;
after the Step S2, further comprising: on receiving the notification about the terminating of the right of the user terminal from the authentication device, stopping forwarding, by the access device, the PPV program data stream to the user terminal.
